# EUROPEAN PATENT APPLICATION

(11) **EP 4 366 046 A1**
(43) Date of publication of application: **08.05.2024**
(21) Application number: 22896822.8
(22) Date of filing: 28.09.2022
(51) Int. Cl.: H01M 50/119, H01M 50/107, H01M 50/152, H01M 50/317

(54) **EDGE-FREE CYLINDRICAL BATTERY STRUCTURE AND PREPARATION METHOD THEREFOR**

(30) Priority: 29.06.2022 CN 202210761979
(71) Applicant: Shenzhen Juheyuan Technology Co., Ltd., Shenzhen, Guangdong 518000 (CN)
(72) Inventor: WANG, Sifan, Shenzhen, Guangdong 518000 (CN); CHENG, Kewen, Shenzhen, Guangdong 518000 (CN); CHENG, Zhilin, Shenzhen, Guangdong 518000 (CN)
(74) Representative: Cabinet Chaillot
(86) International application number: PCT/CN2022/121975
(87) International publication number: WO 2024/000874

(57) **Abstract**

Disclosed is a brimless cylindrical battery structure, comprising a combination cover with a pressure relief structure, a bottom cover, a roll core with single or multiple tabs at both ends, and a shell used as a roll core storage container, a combination cover, and a welding carrier for the bottom cover; the roll core is put into the shell; the positive tab of the roll core is connected to the combination cover, and the negative tab of the roll core is connected to the bottom cover; the combination cover forms the positive pole accordingly, and the bottom cover forms the negative pole accordingly; the combination cover and the bottom cover are sealed and installed on both sides of the shell. The invention has high consistency in appearance and size, higher safety performance and higher capacity battery to increase customer experience.

## Description

### 1. Technical Field

The invention relates to a battery, in particular to a brimless cylindrical battery structure and a preparation method thereof.

### 2. Background Art

Portable electronic devices, electronic cigarettes, and atomizer devices are widely used in people's production and life. However, for the traditional pouch cylindrical battery, in order to increase the capacity of the battery to enhance its own battery life, it usually leads to an increase in the diameter and height of the pouch cylindrical battery; when reducing the diameter and height of a cylindrical battery, the capacity and endurance of the battery are usually reduced. Therefore, for the traditional cylindrical batteries, large capacity and small volume can not be taken into consideration at the same time.

Disadvantages of traditional soft pack cylindrical battery: 1. during the process of charging, discharging and storage, the electrolyte will continuously corrode the aluminum layer, causing gas to be generated after the battery is stored and causing fatal defects such as leakage; 2. the thin aluminum-plastic film (113um) of the pouch battery cannot fully protect the winding core, which will cause a short circuit between the positive and negative electrodes inside the winding core due to external extrusion, resulting in fatal damage; 3. due to the differences in equipment and personnel operating methods in the manufacturing process of soft-pack batteries, the consistency of battery dimensions is poor; 4. due to the packaging process of top seal, side seal, and two side seals, the internal space of the pouch battery is limited, and the capacity cannot be further improved.

### 3. Summary of the Invention

The technical problem to be solved by the invention is to provide a brimless cylindrical battery structure and a preparation method thereof. By providing a combination cover with a special pressure relief structure and adopting different sealing methods, it has high consistency in appearance and size, higher safety performance and higher capacity battery to increase customer experience, and can effectively solve the deficiencies in the existing technology.

The invention is realized by the following technical solutions: brimless cylindrical battery structure, comprising a combination cover with a pressure relief structure, a bottom cover, a roll core with single or multiple tabs at both ends, and a shell used as a roll core storage container, a combination cover, and a welding carrier for the bottom cover; the roll core is put into the shell; the positive tab of the roll core is connected to the combination cover, and the negative tab of the roll core is connected to the bottom cover; the combination cover forms the positive pole accordingly, and the bottom cover forms the negative pole accordingly; the combination cover and the bottom cover are sealed and installed on both sides of the shell;
the combination cover comprises a fixing part, a sealing part, and an adhesive layer; the fixing part is fixed on the shell; the fixing part is provided with an opening cavity for the sealing part to be buckled into, and the protruding part of the sealing part is buckled into the opening cavity and fixed with the fixing part by the adhesive layer.

Preferably, the fixing part adopts a steel sheet with the same cross-sectional shape as the shell, and a recessed assembly cavity is provided on the outside of the steel sheet; the sealing part adopts an aluminum sheet, and the whole sealing part is buckled into and installed in the assembly cavity; the protruding part of the sealing part is buckled into the opening cavity.

Preferably, the adhesive layer adopts composite adhesive material.

Preferably, the composite adhesive material adopts PP material.

Preferably, the shell is made of stainless steel, and both ends thereof are transparent; the bottom cover is made of stainless steel, and a circular liquid injection hole is provided in the middle; the electrolyte is injected into the shell from the liquid injection hole on the bottom cover.

Preferably the liquid injection hole is sealed by a sealing nail.

A preparation method of the brimless cylindrical battery structure, comprising the following steps:
S1: prepare the roll core, shell, combination cover and bottom cover, then put the roll core into the shell first, weld the positive tab of the roll core and the combination cover with laser, and weld the negative tab and the bottom cover with laser, so that the combination cover forms the positive pole, and the bottom cover forms the negative pole;
S2: after both ends of the shell are welded firmly, seal the combination cover and the bottom cover with laser welding;
S3: finally, inject electrolyte from the liquid injection hole of the bottom cover, and fill the sealing nail into the liquid injection hole of the bottom cover to complete the final sealing.

The beneficial effects of the invention are as follows: 1. the brimless battery according to the invention can increase the space utilization rate by 12% and the capacity by 10% according to the battery of the same specification;
2. compared with the traditional pouch battery manufacturing process, it is reduced by 30%, which brings faster manufacturing cycle and lower manufacturing cost;
3. the use of custom-made standard accessories for the boundless battery is easy to implement a high degree of automation, and the product size consistency has obvious advantages;
4. when the pressure of the combination cover (new pressure relief device) reaches the threshold value, the aluminum parts in the combination cover will be flushed away to protect the pressure relief;
5. 0.150 mm alloy metal is adopted, with has high structural strength and good mechanical load capacity; under the impact of heavy objects, the shell is used as a supporting structure to reduce the impact on the internal core and reduce the thermal runaway of the roll core under impact.

### 4. Brief Description of Accompany Drawings

In order to explain the embodiments of the invention or the technical solutions in the prior art more clearly, the drawings that need to be used in the description of the embodiments or the prior art will be introduced hereinafter. Obviously, the drawings in the following description are only some embodiments of the invention. For those of ordinary skill in the art, other drawings may be obtained from these drawings without creative efforts.

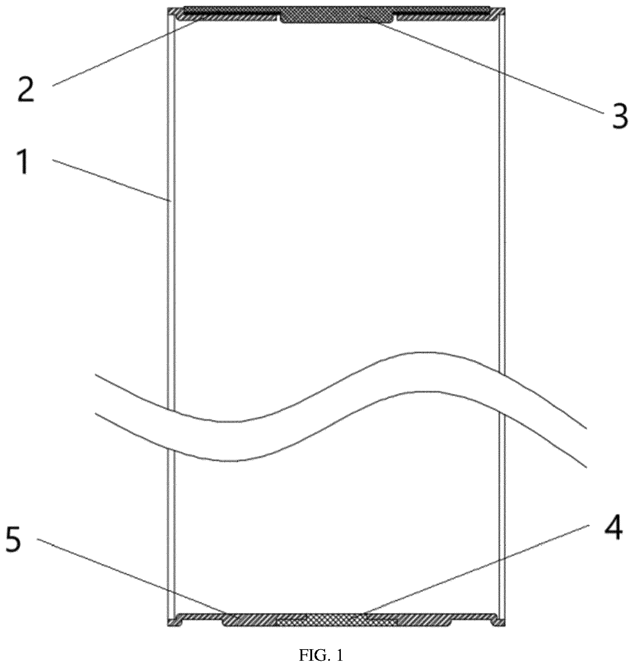

FIG. 1 is an internal sectional schematic view according to the invention;
FIG. 1 is an exploded view according to the invention;
FIG. 3 is an overall structural diagram according to the invention;
FIG. 4 is a partial cross-sectional schematic view according to the invention.

### 5. Specific Embodiment of the Invention

All the features disclosed in the specification, or all disclosed methods or steps in the process, except for mutually exclusive features and/or steps, can be combined in any manner.

Any feature disclosed in the specification (including any appended claims, abstract and drawings), unless specifically stated, can be replaced by other equivalent or equivalent alternative features. That is, unless otherwise stated, each feature is just one example of a series of equivalent or similar features.

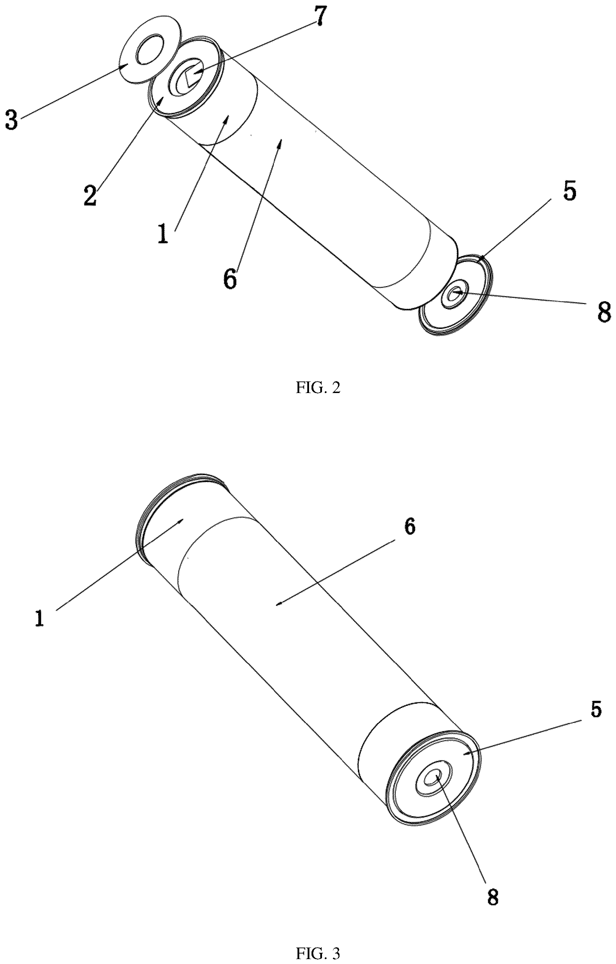

With reference to FIG. 1 to FIG. 3, the invention provides a brimless cylindrical battery structure, comprising a combination cover with a pressure relief structure, a bottom cover 5, a roll core 6 with single or multiple tabs at both ends, and a shell 1 used as a roll core storage container, a combination cover, and a welding carrier for the bottom cover; the roll core 6 is put into the shell 1; the positive tab 7 of the roll core 6 is connected to the combination cover, and the negative tab of the roll core 6 is connected to the bottom cover 5; the combination cover forms the positive pole accordingly, and the bottom cover 5 forms the negative pole accordingly; the combination cover and the bottom cover 5 are sealed and installed on both sides of the shell 1;
the combination cover comprises a fixing part 2, a sealing part 3, and an adhesive layer 11; the fixing part 2 is fixed on the shell 1; the fixing part 2 is provided with an opening cavity for the sealing part to be buckled into, and the protruding part of the sealing part 3 is buckled into the opening cavity and fixed with the fixing part 2 by the adhesive layer.

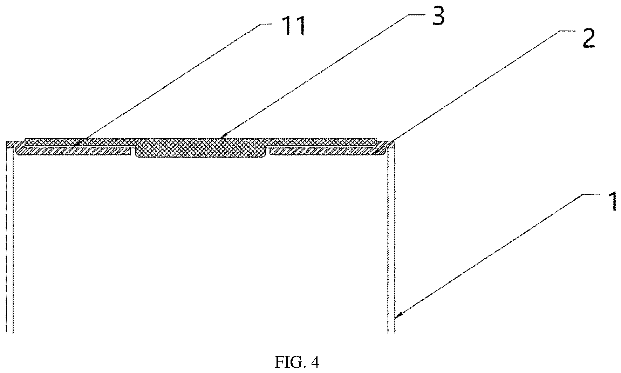

With reference to FIG. 4, the fixing part 2 adopts a steel sheet with the same cross-sectional shape as the shell 1; the cross section of the shell is circular, so the fixing part in this embodiment is also circular; a recessed assembly cavity is provided on the outside of the steel sheet; the sealing part 3 adopts an aluminum sheet, and the whole sealing part 3 is buckled into and installed in the assembly cavity; the protruding part of the sealing part 3 is buckled into the opening cavity. The adhesive layer 11 adopts composite adhesive material. In this embodiment, the composite adhesive material adopts PP material; when the temperature rises to about 120 degrees when the battery is short-circuited, the composite material melts, and the aluminum cover falls off to relieve pressure.

The adhesive layer of the invention can also adopt other adhesives, which can be melted when the temperature rises to a certain extent, so that the sealing part falls off, and the purpose of safe pressure relief is achieved.

In this embodiment, the shell 1 is made of stainless steel, and both ends thereof are transparent; the bottom cover 5 is made of stainless steel, and a circular liquid injection hole 8 is provided in the middle; the electrolyte is injected into the shell 1 from the liquid injection hole 8 on the bottom cover 5; the liquid injection hole 8 is sealed by a sealing nail 4, and the liquid injection hole is sealed by the sealing nail after the liquid injection is completed.

In this embodiment, the seal of the sealing nail is welded by laser welding or sealed by composite material and then sealed by laser welding.

The preparation method of the battery according to the invention is as follows:
prepare the roll core, shell, combination cover and bottom cover, then put the roll core into the shell first, weld the positive tab of the roll core and the combination cover with laser, and weld the negative tab and the bottom cover with laser, so that the combination cover forms the positive pole, and the bottom cover forms the negative pole; after both ends of the shell are welded firmly, seal the combination cover and the bottom cover with laser welding; finally, inject electrolyte from the liquid injection hole of the bottom cover, and fill the sealing nail into the liquid injection hole of the bottom cover to complete the final sealing.

The brimless battery according to the invention can increase the space utilization rate by 12% and the capacity by 10% according to the battery of the same specification; compared with the traditional pouch battery manufacturing process, it is reduced by 30%, which brings faster manufacturing cycle and lower manufacturing cost; the use of custom-made standard accessories for the boundless battery is easy to implement a high degree of automation, and the product size consistency has obvious advantages; when the pressure of the combination cover (new pressure relief device) reaches the threshold value, the aluminum parts in the combination cover will be flushed away to protect the pressure relief; 0.150 mm alloy metal is adopted, with has high structural strength and good mechanical load capacity; under the impact of heavy objects, the shell is used as a supporting structure to reduce the impact on the internal core and reduce the thermal runaway of the roll core under impact.

The above are only specific embodiments of the invention, but the protection scope of the invention is not limited thereto. Any modifications or substitutions creative efforts shall all fall within protection scope of the invention. Therefore, the protection scope of the invention should be subject to the protection scope defined by the claims.

## Claims

1. A brimless cylindrical battery structure, comprising a combination cover with a pressure relief structure, a bottom cover (5), a roll core (6) with single or multiple tabs at both ends, and a shell (1) used as a roll core storage container, a combination cover, and a welding carrier for the bottom cover; the roll core (6) is put into the shell (1); the positive tab (7) of the roll core (6) is connected to the combination cover, and the negative tab of the roll core (6) is connected to the bottom cover (5); the combination cover forms the positive pole accordingly, and the bottom cover (5) forms the negative pole accordingly; the combination cover and the bottom cover (5) are sealed and installed on both sides of the shell (1);
the combination cover comprises a fixing part (2), a sealing part (3), and an adhesive layer (11); the fixing part (2) is fixed on the shell (1); the fixing part (2) is provided with an opening cavity for the sealing part to be buckled into, and the protruding part of the sealing part (3) is buckled into the opening cavity and fixed with the fixing part (2) by the adhesive layer.

2. The brimless cylindrical battery structure of Claim 1, wherein the fixing part (2) adopts a steel sheet with the same cross-sectional shape as the shell (1), and a recessed assembly cavity is provided on the outside of the steel sheet; the sealing part (3) adopts an aluminum sheet, and the whole sealing part (3) is buckled into and installed in the assembly cavity; the protruding part of the sealing part (3) is buckled into the opening cavity.

3. The brimless cylindrical battery structure of Claim 1, wherein the adhesive layer (11) adopts composite adhesive material.

4. The brimless cylindrical battery structure of Claim 3, wherein the composite adhesive material adopts PP material.

5. The brimless cylindrical battery structure of Claim 1, wherein the shell (1) is made of stainless steel, and both ends thereof are transparent; the bottom cover (5) is made of stainless steel, and a circular liquid injection hole (8) is provided in the middle; the electrolyte is injected into the shell (1) from the liquid injection hole (8) on the bottom cover (5).

6. The brimless cylindrical battery structure of Claim 5, wherein the liquid injection hole (8) is sealed by a sealing nail (4).

7. A preparation method of the brimless cylindrical battery structure, comprising the following steps:
S1: prepare the roll core, shell, combination cover and bottom cover, then put the roll core into the shell first, weld the positive tab of the roll core and the combination cover with laser, and weld the negative tab and the bottom cover with laser, so that the combination cover forms the positive pole, and the bottom cover forms the negative pole;
S2: after both ends of the shell are welded firmly, seal the combination cover and the bottom cover with laser welding;
S3: finally, inject electrolyte from the liquid injection hole of the bottom cover, and fill the sealing nail into the liquid injection hole of the bottom cover to complete the final sealing.
